# DEMANDE DE BREVET EUROPEEN

(11) **EP 3 056 527 A1**
(43) Date de publication de la demande: **17.08.2016**
(21) Numéro de dépôt: 15305206.3
(22) Date de dépôt: 11.02.2015
(51) Int. Cl.: C08F 293/00, C10L 1/16, C10L 1/197, C10L 1/236, C10L 10/14

(54) **Copolymeres a blocs et leur utilisation pour ameliorer les proprietes a froid de carburants ou combustibles**

(71) Demandeur: TOTAL MARKETING SERVICES, 92800 Puteaux (FR)
(72) Inventeur: Prevost, Julie, 69005 Lyon (FR); Heroguez, Valérie, 33700 Merignac (FR); Collette, Florain, 33380 Biganos (FR)
(74) Mandataire: Hirsch & Associés

(57) **Abrégé**

L'invention concerne un copolymère à blocs et son utilisation comme additif de tenue à froid d'un carburant ou combustible. Le copolymère à blocs comprenant :
(i) un bloc **A** consistant en une chaine de motifs structuraux dérivés d'un ou de plusieurs monomères α,β-insaturés acrylate ou méthacrylate d'alkyle,
(ii) un bloc **B** consistant en une chaine de motifs structuraux dérivés d'un ou de plusieurs monomères α,β-insaturés choisis parmi les dérivés styréniques dont le noyau aromatique est substitué par au moins un groupement R choisi parmi les groupements :
- esters d'alkyle en C₁ à C₂₄ et,
- les chaines hydrocarbonées, linéaires ou ramifiées, de préférence acyclique, en C₁ à C₁₂, ladite chaine étant substituée par un ou plusieurs groupements contenant un sel d'ammonium quaternaire.

L'invention concerne également un concentré d'additif contenant un tel copolymère ainsi que son utilisation comme additif anti-sédimentation et, avantageusement, comme additif Booster de TLF.

## Description

La présente invention concerne des copolymères à blocs et les concentrés d'additif contenant de tels copolymères. L'invention concerne leur utilisation comme additif pour carburants ou combustibles, en particulier l'utilisation de tels additifs pour améliorer les propriétés de tenue à froid des carburants ou combustibles lors de leur stockage et/ou leur utilisation à basse température.
La présente invention concerne également des compositions de carburant et combustible additivées avec un additif fluidifiant à froid (CFI) comprenant de tels copolymères.

### ETAT DE L'ART ANTERIEUR

Les carburants ou combustibles contenant des composés à substituants n-alkyle, iso-alkyle ou n-alcényle telles que des cires paraffiniques sont connus pour présenter des propriétés d'écoulement détériorées à basse température, typiquement en dessous de 0 °C. En particulier, on sait que les distillats moyens obtenus à partir d'huiles brutes d'origine pétrolière par distillation comme le gazole ou le fioul domestique contiennent différentes quantités de n-alcanes ou n-paraffines selon leur provenance. Ces composés à substituants n-alkyle, iso-alkyle ou n-alcényle ont tendance à cristalliser par abaissement de la température, bouchant les tuyaux, canalisations, pompes et filtres, par exemple dans les circuits du carburant des véhicules automobiles. En hiver ou dans des conditions d'utilisation des carburants ou combustibles à température inférieure à 0°C, le phénomène de cristallisation peut conduire à la diminution des propriétés d'écoulement des carburants ou combustibles et, par conséquent des difficultés lors de leur transport, du stockage et/ou de leur utilisation. L'opérabilité à froid des carburants ou combustibles est importante, notamment pour assurer le démarrage des moteurs à froid. Si les paraffines sont cristallisées au fond du réservoir, elles peuvent être entraînées au démarrage dans le circuit de carburant et colmater notamment les filtres et préfiltres disposés en amont des systèmes d'injection (pompe et injecteurs). De même, pour le stockage des fiouls domestiques, les paraffines précipitent en fond de cuve et peuvent être entraînées et obstruer les conduites en amont de la pompe et du système d'alimentation de la chaudière (gicleur et filtre).
Ces problèmes sont bien connus dans le domaine des carburants et combustibles, et de nombreux additifs ou mélanges d'additifs ont été proposés et commercialisés pour réduire la taille des cristaux de paraffines et/ou changer leur forme et/ou les empêcher de se former. Une taille de cristaux la plus faible possible est préférée car elle minimise les risques de bouchage ou de colmatage de filtre. Les agents d'amélioration d'écoulement habituels dits fluidifiants à froid (en anglais « cold flow improvers » ou CFI) pour les huiles brutes et les distillats moyens sont des co- et ter-polymères d'éthylène et d'ester(s) vinylique(s) et/ou acrylique(s), seuls ou en mélange. Les additifs fluidifiants à froid (CFI) destinés à abaisser la Température Limite de Filtrabilité (TLF) et le point d'écoulement (PE) inhibent la croissance des cristaux à basse température en favorisant la dispersion des cristaux de paraffine ; ce sont par exemple les polymères d'éthylène et d'acétate de vinyle et/ou de propionate de vinyle (EVA ou EVP), aussi appelés additifs de TLF (Température Limite de Filtrabilité). Ce type d'additifs, très largement connu par l'homme du métier, est systématiquement ajouté aux distillats moyens de type classique en sortie de raffinerie. Ces distillats additivés sont utilisés comme carburant pour moteur Diesel ou comme combustible de chauffage. Des quantités supplémentaires de ces additifs peuvent être rajoutées aux carburants vendus en stations service notamment pour satisfaire les spécifications Grand froid.

Pour améliorer à la fois la TLF et le point d'écoulement des distillats, on rajoute à ces additifs de TLF, des additifs ayant la fonction d'agir en combinaison avec ces additifs sur le point d'écoulement des distillats. L'art antérieur décrit abondamment de telles combinaisons d'additifs améliorant à la fois la Température Limite de Filtrabilité (TLF) et la température d'écoulement aux basses températures des distillats hydrocarbonés de type classique.

A titre d'exemple, on peut citer le brevet US 3 275427 décrivant un distillat moyen de coupe de distillation comprise entre 177 et 400°C contenant un additif constitué de 90 à 10 % en poids d'un copolymère d'éthylène comprenant de 10 à 30% de motifs acétate de vinyle de masse molaire en poids comprise entre 1000 et 3000 g.mol⁻¹ et de 10 à 90 % massique d'un polyacrylate de lauryl et/ou d'un polyméthacrylate de lauryl de masse molaire en poids variant de 760 à 100.000 g.mol⁻¹.

A titre d'exemple de combinaison, on peut également citer le document EP0857776 dans lequel les résines alkylphénol-aldéhyde issues de la condensation d'alkylphénol et d'aldéhyde ont été proposées en association avec des copolymères ou terpolymères éthylène /ester vinylique, pour améliorer la fluidité d'huiles minérales.

Le document FR2903418 décrit en particulier l'utilisation d'une combinaison d'un polyacrylate ou polymétacrylate avec un additif fluidifiant à froid (CFI) de type EVA ou EVP, pour révéler l'efficacité des additifs CFI en amplifiant leur effet sur la TLF.

Outre l'amélioration de l'écoulement de l'huile et du distillat, un autre but des additifs d'amélioration de l'écoulement est d'assurer la dispersion des cristaux de paraffines, de manière à retarder ou empêcher la sédimentation des cristaux de paraffines et donc la formation d'une couche riche en paraffines en fond de récipients, cuves ou réservoirs de stockage ; ces additifs dispersants de paraffines sont dénommés additifs anti-sédimentation ou WASA (acronyme du terme anglais « Wax Anti-Settling Additive »).

Des résines alkylphénol-aldéhyde modifiées ont été décrites dans le document FR2969620 comme additif anti-sédimentation en combinaison avec un additif de TLF.

Du fait de la diversification des sources de carburant ou combustible, il existe toujours un besoin de trouver de nouveaux additifs pour améliorer les propriétés des carburants ou combustibles à basse température également dénommées propriétés de tenue à froid, notamment leurs propriétés d'écoulement lors de leur stockage et/ou leur utilisation à basse température.

Ce besoin est particulièrement important pour les carburants ou combustibles comprenant un ou plusieurs composés à substituants n-alkyle, iso-alkyle ou n-alcényle présentant une tendance à la cristallisation dans lesdits carburants ou combustibles lors de leur stockage et/ou utilisation à basse température.

Ainsi, le but de la présente invention est de proposer de nouveaux copolymères et les concentrés les contenant qui peuvent avantageusement être utilisés comme additifs pour améliorer les propriétés de tenue à froid de ces carburants ou combustibles, lors de leur stockage et/ou leur utilisation à basse température, typiquement inférieure à 0°C, en particulier, comme additifs anti-sédimentation.

Le but de la présente invention est en outre de proposer de nouveaux copolymères et les concentrés les contenant agissant à la fois sur la TLF et retardant et/ou empêchant la sédimentation des cristaux de composés à substituants n-alkyle, iso-alkyle ou n-alcényle, en particulier des paraffines.

Enfin, un autre objet de l'invention est de proposer une composition de carburant ou de combustible ayant des propriétés de tenue à froid améliorées, en particulier à des températures inférieures à 0°C, de préférence inférieures à -5°C.

### OBJET DE L'INVENTION

L'invention a donc pour objet un copolymère à blocs tel que défini dans la revendication 1 ainsi qu'un concentré d'additif comprenant un tel copolymère à blocs tel que défini dans la revendication 15.

La demanderesse a en outre découvert que le copolymère à blocs et le concentré d'additif permettent d'améliorer les propriétés de tenue à froid des carburants ou combustibles comprenant un ou plusieurs composés à substituants n-alkyle, iso-alkyle ou n-alcényle présentant une tendance à la cristallisation dans lesdits carburants ou combustibles lors de leur stockage et/ou utilisation à basse température.

La demanderesse a découvert que le copolymère à blocs et le concentré d'additif selon l'invention peuvent être utilisés pour retarder ou empêcher la sédimentation des cristaux des composés à substituants n-alkyle, iso-alkyle ou n-alcényle du carburant ou combustible lors de son stockage et/ou de son utilisation à basse température.

La demanderesse a en outre formulé des compositions de carburant ou combustible telles que définies dans la revendication 19.

L'objet de la présente invention concerne, en particulier, un copolymère à blocs comprenant :
(i) un bloc **A** consistant en une chaine de motifs structuraux dérivés d'un ou de plusieurs monomères α,β-insaturés acrylate ou méthacrylate d'alkyle, et
(ii) un bloc **B** consistant en une chaine de motifs structuraux dérivés d'un ou de plusieurs monomères α,β-insaturés choisis parmi les dérivés styrèniques dont le noyau aromatique est substitué par au moins un groupement R choisi parmi les groupements :
   - esters d'alkyle en C₁ à C₂₄, de préférence en C₁ à C₁₂, plus préférentiellement le groupement acétoxy et,
   - les chaines hydrocarbonées, linéaires ou ramifiées, de préférence acycliques, en C₁ à C₁₂, de préférence en C₁ à C₈, plus préférentiellement les groupements alkyles, ladite chaine étant substituée par un ou plusieurs groupements contenant un sel d'ammonium quaternaire, de préférence un sel de trialkylammonium.

Selon un mode de réalisation particulier, le copolymère à blocs comprend également (iii) une chaine terminale **I** consistant en une chaine hydrocarbonée, cyclique ou acyclique, saturée ou insaturée, linéaire ou ramifiée, en C₁ à C₃₂, de préférence en C₄ à C₂₄, plus préférentiellement en C₁₀ à C₂₄, ladite chaine étant située en position terminale dudit copolymère à blocs

Avantageusement, le monomère α,β-insaturé du bloc **A** est choisi parmi les acrylates ou méthacrylates d'alkyle, linéaires ou ramifiés, en C₁ à C₃₄, de préférence en C₆ à C₂₄, plus préférentiellement en C₈ à C₂₄.

Selon un mode de réalisation particulier, le monomère α,β-insaturé du bloc **B** est choisi parmi les dérivés styrèniques dont le noyau aromatique est substitué par au moins un groupement ester d'alkyle en C₁ à C₂₄, de préférence en C₁ à C₁₂, de préférence le groupement acétoxy, ledit groupement ester étant en position méta, ortho ou para sur le noyau aromatique, de préférence en position para.

Selon un autre mode de réalisation particulier, le monomère α,β-insaturé du bloc **B** est choisi parmi les dérivés styréniques dont le noyau aromatique est substitué par au moins une chaine hydrocarbonée, linéaire ou ramifiée, de préférence acyclique, en C₁ à C₁₂, de préférence en C₁ à C₈, de préférence un groupement alkyle, ladite chaine étant éventuellement substituée par un ou plusieurs groupements contenant un sel d'ammonium quaternaire, de préférence un sel de trialkylammonium.

Selon une variante, le monomère α,β-insaturé du bloc **B** est choisi parmi les isomères des sels de (vinylbenzyl)trialkylammonium en position ortho, méta ou para, de préférence en position para, purs ou mélange.

Avantageusement, les substituants alkyles de l'ammonium sont identiques ou différents et choisis indépendamment parmi les alkyles en C₁ à C₁₀, de préférence en C₁ à C₄, linéaires ou ramifiés, de préférence acycliques, plus préférentiellement le groupement méthyle ou éthyle.

Selon un mode de réalisation particulier, le copolymère à blocs est obtenu par copolymérisation séquencée et contrôlée, de préférence, à l'aide d'un amorceur de polymérisation comprenant la chaine terminale **I.**

Selon un mode de réalisation particulier, le copolymère à blocs est un copolymère diséquencé.

Selon un mode de réalisation particulier préféré, le copolymère à blocs est représenté par la formule (I) ou (II) suivante : 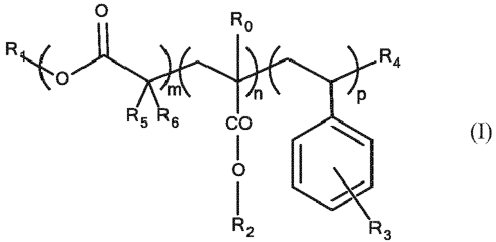 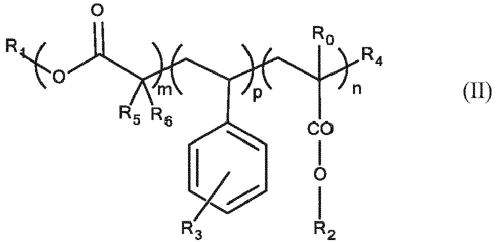 dans laquelle
m =0 ou 1,
n est un entier compris entre 2 et 20, de préférence entre 3 et 16,
p est un entier compris entre 2 et 20, de préférence entre 3 et 16,
R₀ est choisi parmi l'hydrogène ou le groupement méthyle,
R₁ est choisi parmi les chaines hydrocarbonées, cycliques ou acycliques, saturées ou insaturées, linéaires ou ramifiées, en C₁ à C₃₂, de préférence en C₄ à C₂₄, plus préférentiellement en C₁₀ à C₂₄, de préférence les groupements alkyles,
R₂ est choisi parmi les chaines hydrocarbonées, linéaires ou ramifiées, de préférence acycliques en C₁ à C₃₂, de préférence en C₄ à C₂₄, plus préférentiellement en C₁₀ à C₂₄, encore plus préférentiellement les groupements alkyles,
R₃ est un substituant en position ortho, méta ou para sur le noyau aromatique, de préférence en position para, choisi parmi le groupe constitué par :
   - les groupements -OCOR₇ où R₇ est choisi parmi les groupements alkyles en C₁ à C₂₄, de préférence en C₁ à C₁₂, plus préférentiellement en C₁ à C₆, linéaires ou ramifiés, de préférence acycliques et,
   - les groupements de formule (III) suivante :

      -CH₂-N⁺(R₈)(R₉)(R₁₀) X- (III)

      dans laquelle
X- est choisi parmi les ions hydroxyde, halogénures et les anions organiques, de préférence le chlore et,
R₈, R₉ et R₁₀ sont identiques ou différents et choisis indépendamment parmi les groupements alkyles en C₁ à C₁₀, de préférence en C₁ à C₄, linéaires ou ramifiés, de préférence acycliques, plus préférentiellement le groupement méthyle ou éthyle,
R₄ est choisi parmi le groupe constitué par :
   - l'hydrogène ; -OH
   - les halogènes, de préférence le brome ; et,
   - les chaines hydrocarbonées, cycliques ou acycliques, saturées ou insaturées, linéaires ou ramifiées, en C₁ à C₃₂, de préférence en C₄ à C₂₄, plus préférentiellement en C₁₀ à C₂₄, de préférence les groupements alkyles, lesdites chaines étant éventuellement substituées par un ou plusieurs groupements contenant au moins un hétéroatome choisi parmi N et O,
R₅ et R₆ sont identiques ou différents et choisis indépendamment parmi le groupe constitué par l'hydrogène et les groupements alkyles en C₁ à C₁₀, de préférence en C₁ à C₄, linéaires ou ramifiés, plus préférentiellement acycliques, encore plus préférentiellement le groupement méthyle.

L'objet de la présente invention concerne, également, l'utilisation d'un copolymère à blocs selon l'invention, comme additif anti-sédimentation.

Avantageusement, le copolymère à blocs selon l'invention est utilisé comme additif améliorant les propriétés de tenue à froid d'un carburant ou combustible issu d'une ou de plusieurs sources choisies parmi le groupe consistant en les sources minérale, de préférence le pétrole, animale, végétale et synthétique. Le carburant ou combustible comprend un ou plusieurs composés à substituants n-alkyle, iso-alkyle ou n-alcényle présentant une tendance à la cristallisation dans ledit carburant ou un combustible lors de son stockage et/ou de son utilisation à basse température. Le copolymère à blocs est utilisé en association avec au moins un additif fluidifiant à froid (CFI) améliorant les propriétés d'écoulement à basse température dudit carburant ou combustible lors de son stockage et/ou son utilisation à basse température.

Selon un mode de réalisation particulier, le copolymère à blocs permet également d'amplifier l'effet fluidifiant de l'additif fluidifiant à froid (CFI) en améliorant la Température Limite de Filtrabilité (TLF) selon la norme NF EN 116 dudit carburant ou combustible.

L'objet de la présente invention concerne, également, un concentré d'additif comprenant un copolymère à blocs selon l'invention, en mélange avec un liquide organique. Le liquide organique est inerte vis-à-vis du copolymère à blocs et miscible aux carburants ou combustibles issus d'une ou de plusieurs sources choisies parmi le groupe consistant en les sources minérale, de préférence le pétrole, animale, végétale et synthétique. Le carburant ou combustible comprend un ou plusieurs composés à substituants n-alkyle, iso-alkyle ou n-alcényle présentant une tendance à la cristallisation dans ledit carburant ou un combustible lors de son stockage et/ou de son utilisation à basse température.

Avantageusement, le concentré d'additif comprend au moins un additif fluidifiant à froid (CFI) améliorant la tenue à froid, de préférence améliorant les propriétés d'écoulement à basse température du carburant ou combustible lors de son stockage et/ou son utilisation à basse température, ledit additif fluidifiant à froid étant de préférence choisi parmi les copolymères et terpolymères d'éthylène et d'ester(s) vinylique(s) et/ou acrylique(s) (EVA et/ou EVP), seuls ou en mélange.

L'objet de la présente invention vise, également, l'utilisation d'un tel concentré pour retarder ou empêcher la sédimentation des cristaux des composés à substituants n-alkyle, iso-alkyle ou n-alcényle du carburant ou combustible lors de son stockage et/ou de l'utilisation à basse température.

Le carburant ou combustible est, de préférence, choisi parmi les gazoles, les bio-gazoles, les mélanges de gazole et de bio-gazole de type Bₓ et les fiouls, de préférence, les fiouls domestiques (FOD).

L'objet de la présente invention vise, également, une composition de carburant ou combustible comprenant :
(1) un carburant ou combustible issu d'une ou de plusieurs sources choisies parmi le groupe consistant en les sources minérale, de préférence le pétrole, animale, végétale et synthétique, avantageusement, choisi parmi les gazoles, les bio-gazoles, les mélanges de gazole et de bio-gazole de type Bₓ et les fiouls, avantageusement, les fiouls domestiques (FOD), ledit carburant ou combustible comprenant un ou plusieurs composés à substituants n-alkyle, iso-alkyle ou n-alcényle présentant une tendance à la cristallisation dans ledit carburant ou combustible lors de son stockage et/ou de son utilisation à basse température,
(2) le copolymère à blocs selon l'invention, ledit copolymère étant présent dans la composition dans une quantité suffisante pour retarder ou empêcher la sédimentation des cristaux desdits composés à substituants n-alkyle, iso-alkyle ou n-alcényle, lors du stockage et/ou de l'utilisation à basse température dudit carburant ou combustible (1) et,
(3) un additif fluidifiant à froid (CFI) améliorant la tenue à froid, de préférence, choisi parmi les copolymères et terpolymères d'éthylène et d'ester(s) vinylique(s) et/ou acrylique(s) (EVA et/ou EVP), seuls ou en mélange, ledit additif étant présent dans la composition de carburant ou combustible en une quantité suffisante pour améliorer le comportement d'écoulement à basse température du carburant ou combustible (1) lors de son stockage et/ou de son utilisation à basse température.

Selon un mode de réalisation particulier, la composition contient au moins 10ppm, de préférence au moins 50 ppm, avantageusement entre 10 et 5 000ppm, plus préférentiellement entre 10 et 1 000ppm du copolymère à blocs (2) et au moins 10ppm, de préférence au moins 50 ppm, avantageusement entre 10 et 5 000ppm, plus préférentiellement entre 10 et 1 000ppm de l'additif fluidifiant à froid (3).

Les unités mentionnées en ppm dans la présente demande correspondent à des ppm massiques sauf indication contraire.

### DESCRIPTION DETAILLEE

D'autres avantages et caractéristiques ressortiront plus clairement de la description qui va suivre. Les modes particuliers de réalisation de l'invention sont donnés à titre d'exemples non limitatifs.

Selon un mode de réalisation particulier, un copolymère à blocs comprenant au moins un bloc **A** et au moins un bloc **B** est préparé selon tout procédé connu de copolymérisation séquencée et contrôlée à partir d'au moins deux types de monomères α,β-insaturés.

La polymérisation séquencée et contrôlée est, de préférence, choisie parmi la polymérisation radicalaire contrôlée, par exemple, par polymérisation radicalaire par transfert d'atome (ATRP en anglais « Atom Transfer Radical Polymerization»), la polymérisation radicalaire par le nitroxyde (NMP en anglais « Nitroxide-mediated polymerization »), les procédés de transfert dégénératif (en anglais « degenerative transfer processes ») tels que la polymérisation par transfert d'iode dégénérative (en anglais « ITRP-iodine transfer radical polymerization ») ou la polymérisation radicalaire par transfert de chaîne réversible par addition-fragmentation (RAFT en anglais « Reversible Addition-Fragmentation Chain Transfer), les polymérisations dérivées de l'ATRP telles que les polymérisations utilisant des initiateurs pour la régénération continue de l'activateur (ICAR-Initiators for continuous activator regeneration) ou utilisant des activateurs régénérés par transfert d'électron (ARGET en anglais « activators regenerated by electron transfer »).

On citera, à titre d'exemple, la publication « Macromolecular Engineering by atom transfer radical polymerization », JACS, 136, 6513-6533 (2014) qui décrit un procédé de polymérisation séquencée et contrôlée pour former des copolymères à blocs.

La polymérisation peut avantageusement être réalisée à partir d'au moins deux types de monomères α,β-insaturés et d'un amorceur de polymérisation comprenant une chaine terminale **I.**

La polymérisation est typiquement réalisée dans un solvant, sous atmosphère inerte, à une température de réaction allant en général de 0 à 200°C, de préférence de 50°C à 130°C. Le solvant peut être choisi parmi les solvants polaires, en particulier les éthers comme l'anisole (méthoxybenzène) ou le tétrahydrofuranne ou les solvants apolaires, en particulier, les paraffines, les cycloparaffines, les aromatiques et les alkylaromatiques ayant de 1 à 19 atomes de carbone, par exemple, le benzène, le toluène, le cyclohexane, le méthylcyclohexane, le n-butène, le n-hexane, le n-heptane et similaire.

Les différentes techniques et conditions de polymérisation sont largement décrites dans la littérature et relèvent des connaissances générales de l'homme de l'art. Pour la polymérisation radicalaire par transfert d'atome (ATRP en anglais «Atom Transfer Radical Polymerization»), la réaction est généralement réalisée sous vide en présence d'un amorceur, d'un ligand et d'un catalyseur. A titre d'exemple de ligand, on peut citer la N,N,N',N",N"-Pentaméthyldiéthylenetriamine (PMDETA), la 1,1,4,7,10,10-hexaméthyltriéthylène-tétramine (HMTETA), la 2,2'-Bipyridine (BPY) et la Tris(2-pyridylmethyl)amine (TPMA). A titre d'exemple de catalyseur, on peut citer : CuX, CuX₂, avec X=Cl, Br et les complexes à base de ruthénium Ru²⁺/Ru³⁺.

La polymérisation ATRP est, de préférence, réalisée dans un solvant choisi parmi les solvants polaires.

Selon la technique de polymérisation séquencée et contrôlée, il peut également être envisagé de travailler sous pression.

Le bloc **A** consiste en une chaine de motifs structuraux dérivés d'un ou de plusieurs monomères α,β-insaturés acrylate ou méthacrylate d'alkyle. Le monomère α,β-insaturé du bloc **A** est, de préférence, choisi parmi les acrylates ou méthacrylates d'alkyle, linéaires ou ramifiés, en C₁ à C₃₄, de préférence en C₆ à C₂₄, plus préférentiellement en C₈ à C₂₄.

Le bloc **B** consiste en une chaine de motifs structuraux dérivés d'un ou de plusieurs monomères α,β-insaturés choisis parmi les dérivés styréniques dont le noyau aromatique est substitué par au moins un groupement R choisi parmi les groupements :
- esters d'alkyle en C₁ à C₂₄, de préférence en C₁ à C₁₂, plus préférentiellement le groupement acétoxy et,
- les chaines hydrocarbonées, linéaires ou ramifiées, de préférence acycliques, en C₁ à C₁₂, de préférence en C₁ à C₈, plus préférentiellement les groupements alkyles, ladite chaine étant éventuellement substituée par un ou plusieurs groupements contenant un sel d'ammonium quaternaire, de préférence un sel de trialkylammonium.

Selon un mode de réalisation particulier, le monomère α,β-insaturé du bloc **B** est choisi parmi les dérivés styréniques dont le noyau aromatique est substitué par au moins un groupement ester d'alkyle en C₁ à C₂₄, de préférence en C₁ à C₁₂, de préférence le groupement acétoxy. Le groupement ester d'alkyle peut être en position ortho, méta ou para sur le noyau aromatique, de préférence en position para.

Selon un autre mode de réalisation particulier, le monomère α,β-insaturé du bloc **B** est choisi parmi les dérivés styréniques dont le noyau aromatique est substitué par au moins une chaine hydrocarbonée, linéaire ou ramifiée, de préférence acyclique, en C₁ à C₁₂, de préférence en C₁ à C₈, de préférence un groupement alkyle, ladite chaine étant éventuellement substituée par un ou plusieurs groupements contenant un sel d'ammonium quaternaire, de préférence un sel de trialkylammonium.

Avantageusement, le monomère α,β-insaturé du bloc **B** est choisi parmi les isomères des sels de (vinylbenzyl)trialkylammonium, purs ou mélange. Le substituant du noyau styrénique peut être en position ortho, méta ou para, de préférence en position para. On préférera les sels de (vinylbenzyl)trialkylammonium.

Les substituants alkyles de l'ammonium sont identiques ou différents et, choisis indépendamment parmi les alkyles en C₁ à C₁₀, de préférence en C₁ à C₄, linéaires ou ramifiés, de préférence acycliques, plus préférentiellement le groupement méthyle ou éthyle.

Le contre-ion du sel d'ammonium quaternaire peut être choisi parmi les ions hydroxyde, halogénures et les anions organiques tels que les carboxylates ou les alcoolates. On choisira de préférence les ions hydroxyde ou halogénures, de préférence chlorure.

Selon un mode de réalisation particulier, le copolymère à blocs comprend une chaine terminale **I** consistant en une chaine hydrocarbonée, cyclique ou acyclique, saturée ou insaturée, linéaire ou ramifiée, en C₁ à C₃₂, de préférence en C₄ à C₂₄, plus préférentiellement en C₁₀ à C₂₄.

On entend par chaine hydrocarbonée cyclique, une chaine hydrocarbonée dont au moins une partie est cyclique, notamment aromatique. Cette définition n'exclut pas les chaines hydrocarbonées comprenant à la fois une partie acyclique et une partie cyclique.

La chaine terminale **I** peut comprendre une chaine hydrocarbonée aromatique, par exemple benzénique et/ou une chaine hydrocarbonée, saturée et acyclique, linéaire ou ramifiée, en particulier une chaine alkyle.

La chaine terminale **I** est, de préférence, choisie parmi les chaines alkyles, de préférence linéaires, plus préférentiellement les chaines alkyles d'au moins 4 atomes de carbone, encore plus préférentiellement d'au moins 12 atomes de carbone.

La chaine terminale **I** est située en position terminale du copolymère à blocs. Elle peut être introduite dans le copolymère à blocs grâce à l'amorceur de polymérisation. Ainsi, la chaine terminale **I** peut, avantageusement, constituer au moins une partie de l'amorceur de polymérisation et est positionnée au sein de l'amorceur de polymérisation afin de permettre d'introduire, lors de la première étape d'amorçage de la polymérisation, la chaine terminale I en position terminale du copolymère à blocs.

L'amorceur de polymérisation est, par exemple, choisi parmi les amorceurs de radicaux libres mis en oeuvre dans le procédé de polymérisation ATRP. Ces amorceurs de radicaux libres bien connus de l'homme du métier sont notamment décrits dans l'article « Atom Transfer Radical Polymerization : current status and future perspectives, Macromolecules, 45, 4015-4039, 2012 ».

L'amorceur de polymérisation est, par exemple, choisi parmi les esters d'alkyle d'acide carboxylique substitué par un halonégure, de préférence, un Brome en position alpha, par exemple, le 2-bromopropionate d'éthyle, le α-bromoisobutyrate d'éthyle, le chorure ou bromure de benzyle, le α-bromophénylacetate d'éthyle et le chloroéthylbenzene. Ainsi, par exemple, le 2-bromopropionate d'éthyle pourra permettre d'introduire dans le copolymère la chaine terminale **I** sous forme d'une chaine alkyle en C₂ et le bromure de benzyle sous forme d'un groupement benzyle.

Selon un mode de réalisation particulier, le copolymère à blocs est un copolymère diséquencé. La structure du copolymère à blocs peut être de type **IAB** ou **IBA,** avantageusement **IAB.** La chaine terminale **I** peut être directement liée au bloc **A** ou **B** selon la structure respectivement **IAB** ou **IBA** ou, être reliée par l'intermédiaire d'un groupement de liaison, par exemple, une fonction ester, amide, amine ou éther. Le groupement de liaison forme alors un pont entre la chaine terminale **I** et le bloc **A** ou **B.**

Selon un mode de réalisation particulier, le copolymère à blocs peut également être fonctionnalisé en bout de chaine selon tout procédé connu, notamment par hydrolyse ou substitution nucléophile, en particulier pour une polymérisation ATRP qui produit un copolymère ayant un halogénure en position terminale. On peut ainsi introduire une chaîne terminale **I'** par post-fonctionnalisation du copolymère à blocs.

La chaîne terminale **I'** comprend, avantageusement, une chaine hydrocarbonée, linéaire ou ramifiée, cyclique ou acyclique, en C₁ à C₃₂, de préférence en C₁ à C₂₄, plus préférentiellement C₁ à C₁₀, encore plus préférentiellement un groupement alkyle, éventuellement substituée par un ou plusieurs groupements contenant au moins un hétéroatome choisi parmi N et O.

Pour une polymérisation ATRP utilisant un halogénure métallique comme catalyseur, cette fonctionnalisation peut, par exemple, être réalisée en traitant le copolymère **IAB** ou **IBA** obtenu par ATRP avec une alkylamine primaire en C₁ à C₃₂ ou un alcool en C₁ à C₃₂ dans des conditions douces pour ne pas modifier les fonctions présentes sur les blocs **A, B** et **I.**

Selon un mode de réalisation particulier préféré, le copolymère à blocs est représenté par la formule (I) ou (II) suivante : 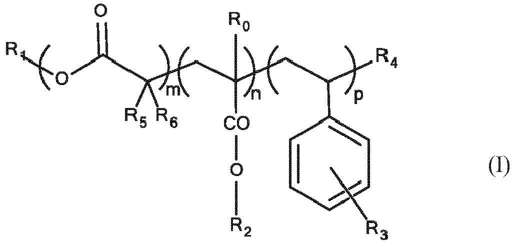 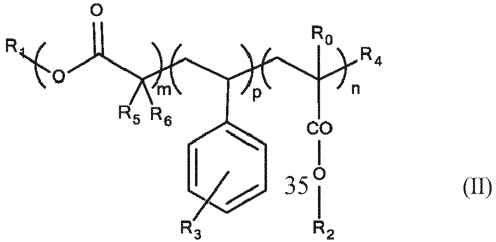 dans laquelle
m=0 ou 1,
n est un entier compris entre 2 et 20, de préférence entre 3 et 16,
p est un entier compris entre 2 et 20, de préférence entre 3 et 16,
R₀ est choisi parmi l'hydrogène ou le groupement méthyle,
R₁ est choisi parmi les chaines hydrocarbonées, cycliques ou acycliques, saturées ou insaturées, linéaires ou ramifiées, en C₁ à C₃₂, de préférence en C₄ à C₂₄, plus préférentiellement en C₁₀ à C₂₄, encore plus préférentiellement les groupements alkyles,
R₂ est choisi parmi les chaines hydrocarbonées, linéaires ou ramifiées, de préférence acycliques, en C₁ à C₃₂, de préférence en C₄ à C₂₄, plus préférentiellement en C₁₀ à C₂₄, encore plus préférentiellement les groupements alkyles,
R₃ est un substituant en position ortho, méta ou para sur le noyau aromatique, de préférence en position para, choisi parmi le groupe constitué par :
   - les groupements -OCOR₇ où R₇ est choisi parmi les groupements alkyles en C₁ à C₂₄, de préférence en C₁ à C₁₂, plus préférentiellement en C₁ à C₆, linéaires ou ramifiés, de préférence acycliques et,
   - les groupements de formule (III) suivante :

      -CH₂-N⁺(R₈)(R₉)(R₁₀) X- (III)
   dans laquelle
   X- est choisi parmi les ions hydroxyde, halogénures et les anions organiques, de préférence le chlore et,
   R₈, R₉ et R₁₀ sont identiques ou différents et, choisis indépendamment parmi les groupements alkyles en C₁ à C₁₀, de préférence en C₁ à C₄, linéaires ou ramifiés, de préférence acycliques, plus préférentiellement le groupement méthyle ou éthyle,
R₄ est choisi parmi le groupe constitué par :
   - l'hydrogène ; -OH
   - les halogènes, de préférence le brome ; et,
   - les chaines hydrocarbonées, cycliques ou acycliques, saturées ou insaturées, linéaires ou ramifiées, en C₁ à C₃₂, de préférence en C₁ à C₂₄, plus préférentiellement en C₁ à C₁₀, de préférence les groupements alkyles, lesdites chaines étant éventuellement substituées par un ou plusieurs groupements contenant au moins un hétéroatome choisi parmi N et O,
R₅ et R₆ sont identiques ou différents et choisis indépendamment parmi le groupe constitué par l'hydrogène et les groupements alkyles en C₁ à C₁₀, de préférence en C₁ à C₄, linéaires ou ramifiés, plus préférentiellement acycliques, encore plus préférentiellement le groupement méthyle.

Dans les formules (I) et (II), le groupement R₁ peut être constitué de la chaine terminale **I** telle que décrite ci-dessus et/ou le groupement R₄ peut être constitué de la chaine terminale **I'** telle que décrite ci-dessus.

En outre, le rapport molaire et/ou massique entre le bloc **A** et **B** dans le copolymère à blocs, et, en particulier, les valeurs m, n et p des formules (I) et (II) seront choisis de manière à ce que le copolymère à blocs soit soluble dans le carburant ou combustible et/ou le liquide organique du concentré pour lequel il est destiné. De même, ce rapport et ces valeurs m, n et p seront optimisées en fonction du carburant ou combustible et/ou le liquide organique de manière à obtenir les meilleures propriétés à froid.

L'optimisation du rapport molaire et/ou massique, notamment pour définir les valeurs m, n et p des formules (I) et (II) peut être effectuée par des essais de routine accessibles à l'homme du métier.

Dans le copolymère à blocs, le rapport molaire entre les blocs **A** et **B** est, avantageusement, compris entre 1:10 et 10:1, de préférence entre 1:2 et 2:1, plus préférentiellement entre 1:0,5 et 0,5:2.

D'autres blocs peuvent éventuellement être présents dans le copolymère à blocs dans la mesure où ils ne changent pas fondamentalement le caractère du copolymère à blocs. On privilégiera néanmoins les copolymères à blocs contenant uniquement les blocs **A** et **B.**

Selon un mode de réalisation particulier, les nombres d'équivalents des monomères du bloc **A** et du bloc **B** mis en réaction lors de la réaction de polymérisation sont identiques ou différents et, indépendamment, compris entre 2 et 20, de préférence entre 3 et 16. On entend par nombre d'équivalents, le rapport entre les quantités de matière (en moles) des monomères du bloc **A** et du bloc **B** lors de la réaction de polymérisation.

Selon un développement particulier de l'invention, le copolymère à blocs peut, avantageusement, être utilisé comme additif de tenue à froid du carburant ou combustible issu d'une ou de plusieurs sources choisies parmi le groupe consistant en les sources minérale, de préférence le pétrole, animale, végétale et synthétique.

On entend par additif de tenue à froid, un additif qui améliore les propriétés de tenue à froid d'un carburant ou combustible, en particulier l'opérabilité à froid lors de son stockage et/ou son utilisation à basse température, typiquement inférieure à 0°C, de préférence inférieure à -5°C.

Le copolymère à blocs est particulièrement avantageux comme additif pour carburant ou combustible comprenant un ou plusieurs composés à substituants n-alkyle, iso-alkyle ou n-alcényle présentant une tendance à la cristallisation dans le carburant ou combustible, lors de son stockage et/ou de son utilisation à basse température.

Les carburants ou combustibles peuvent être choisis parmi les carburants ou combustibles hydrocarbonés liquides seuls ou en mélange. Les carburants ou combustibles hydrocarbonés liquides comprennent notamment des distillats moyens de température d'ébullition comprise entre 100 et 500°C. Ces distillats peuvent par exemple être choisis parmi les distillats obtenus par distillation directe d'hydrocarbures bruts, les distillats sous vide, les distillats hydrotraités, les distillats issus du craquage catalytique et/ou de l'hydrocraquage de distillats sous vide, les distillats résultant de procédés de conversion type ARDS (par désulfuration de résidu atmosphérique) et/ou de viscoréduction, les distillats issus de la valorisation des coupes Fischer Tropsch, les distillats résultant de la conversion BTL (biomass to liquid) de la biomasse végétale et/ou animale, prise seule ou en combinaison, et/ou les biodiesels d'origine animale et/ou végétale et/ou les huiles et/ou esters d'huiles végétales et/ou animales.

La teneur en soufre des carburants ou combustibles est, de préférence, inférieure à 5000 ppm, de préférence inférieure à 500 ppm, et plus préférentiellement inférieure à 50 ppm, voire même inférieure à 10 ppm et avantageusement sans soufre.

Le carburant ou combustible est, de préférence, choisi parmi les gazoles, les biodiesel, les gazoles de type Bₓ et les fiouls, de préférence, les fiouls domestiques (FOD).

On entend par gazole de type Bₓ pour moteur Diesel (moteur à compression), un carburant gazole qui contient x% (v/v) d'esters d'huiles végétales ou animale (y compris huiles de cuisson usagées) transformés par un procédé chimique appelé transestérification faisant réagir cette huile avec un alcool afin d'obtenir des esters d'acide gras (EAG). Avec le méthanol et l'éthanol, on obtient respectivement des esters méthyliques d'acides gras (EMAG) et des esters éthyliques d'acides gras (EEAG). La lettre "B" suivie par un nombre indique le pourcentage d'EAG contenu dans le gazole. Ainsi, un B99 contient 99% de EAG et 1% de distillats moyens d'origine fossile, le B20, 20% de EAG et 80% de distillats moyens d'origine fossile etc... On distingue donc les carburants gazoles de type B₀ qui ne contiennent pas de composés oxygénés, des carburants gazoles de type Bx qui contiennent x% (v/v) d'esters d'huiles végétales ou d'acides gras, le plus souvent esters méthyliques (EMHV ou EMAG). Lorsque l'EAG est utilisé seul dans les moteurs, on désigne le carburant par le terme B100.

Selon un développement particulier, le carburant ou combustible est choisi parmi les gazoles, les biodiesel et les gazoles de type Bₓ.

Selon un mode de réalisation particulier, le copolymère à blocs décrit ci-dessus est utilisé comme additif anti-sédimentation. Le copolymère à blocs permet, avantageusement, de retarder ou empêcher la sédimentation des cristaux des composés à substituants n-alkyle, iso-alkyle ou n-alcényle. En particulier, le copolymère à blocs peut avantageusement être utilisé pour retarder ou empêcher la sédimentation des cristaux de n-alcanes, de préférence, les n-alcanes contenant au moins 12 atomes de carbone, plus préférentiellement au moins 20 atomes de carbone, encore plus préférentiellement au moins 24.

Le copolymère à blocs est, avantageusement, également utilisé comme additif de tenue à froid en association avec au moins un additif fluidifiant à froid (CFI) améliorant les propriétés d'écoulement à basse température du carburant ou combustible lors de son stockage et/ou son utilisation à basse température.

L'additif fluidifiant à froid (CFI) est, préférence, choisi parmi les copolymères et terpolymères d'éthylène et d'ester(s) vinylique(s) et/ou acrylique(s), seuls ou en mélange. A titre d'exemple, on peut citer les copolymères d'éthylène et d'ester insaturé, tels que copolymères éthylène/acétate de vinyle (EVA), éthylène/propionate de vinyle (EVP), éthylène/éthanoate de vinyle (EVE), éthylène/méthacrylate de méthyle (EMMA), et éthylène/fumarate d'alkyle décrits, par exemple, dans les documents US3048479, US3627838, US3790359, US3961961 et EP261957.

L'additif fluidifiant à froid (CFI) est avantageusement choisi parmi les copolymères d'éthylène et d'ester(s) vinylique(s), seuls ou en mélange, en particulier les copolymères éthylène/acétate de vinyle (EVA) et éthylène/propionate de vinyle (EVP), plus préférentiellement les copolymères éthylène/acétate de vinyle (EVA).

Le copolymère à blocs est, avantageusement, utilisé pour amplifier l'effet fluidifiant (d'écoulement) de l'additif fluidifiant à froid (CFI) en améliorant la Température Limite de Filtrabilité (TLF) du carburant ou combustible, la TLF étant mesurée selon la norme NF EN 116.

Cet effet est usuellement dénommé effet « Booster de TLF » dans la mesure où la présence du copolymère à blocs améliore le caractère fluidifiant de l'additif CFI. Cette amélioration se traduit, en particulier, par une baisse significative de la TLF de la composition de carburant ou combustible additivée avec cette association comparativement à la même composition de carburant ou combustible additivée uniquement avec l'additif CFI, au même taux de traitement. Généralement, une baisse significative de la TLF se traduit par une diminution d'au moins 3°C de la TLF selon la norme NF EN 116.

Le copolymère à blocs présente dans ce cas un double effet, « Booster de TLF » et anti-sédimentation.

Le copolymère à blocs peut être ajouté dans les carburants ou combustibles au sein de la raffinerie, et/ou être incorporé en aval de la raffinerie, éventuellement, en mélange avec d'autres additifs, sous forme d'un concentré d'additif, encore appelé selon l'usage « package d'additif ».

Le copolymère à blocs est utilisé comme additif de tenue à froid dans le carburant ou combustible à une teneur, avantageusement d'au moins 10ppm, de préférence d'au moins 50 ppm, plus préférentiellement à une teneur comprise entre 10 et 5 000ppm, encore plus préférentiellement entre 10 et 1 000ppm.

Selon un autre mode de réalisation particulier, un concentré d'additif comprend le copolymère à blocs tel que décrit ci-dessus, en mélange avec un liquide organique.

Le liquide organique doit être inerte vis-à-vis du copolymère à blocs et miscible aux carburants ou combustibles tels que décrits ci-dessus. On entend par miscible, le fait que le copolymère à blocs et le liquide organique forment une solution ou une dispersion de manière à faciliter le mélange du copolymère à blocs dans les carburants ou combustibles selon les procédés classiques d'additivation des carburants ou combustibles.

En particulier, le liquide organique doit être miscible aux carburants ou combustibles comprenant un ou plusieurs composés à substituants n-alkyle, iso-alkyle ou n-alcényle présentant une tendance à la cristallisation dans ledit carburant ou un combustible lors de son stockage et/ou de son utilisation à basse température. Le carburant ou combustible est, de préférence, choisi parmi les gazoles, les biodiesel, les gazoles de type Bₓ et les fiouls, de préférence, les fiouls domestiques (FOD).

Le liquide organique est, avantageusement, choisi parmi les solvants hydrocarbonés aromatiques tels que le solvant commercialisé sous le nom « SOLVESSO », les alcools, les éthers et autres composés oxygénés et les solvants paraffiniques tels que l'hexane, pentane ou les isoparaffines, seuls ou en mélange.

Le concentré d'additif comprend, avantageusement, au moins un additif fluidifiant à froid (CFI) améliorant la tenue à froid, de préférence améliorant les propriétés d'écoulement à basse température du carburant ou combustible lors de son stockage et/ou son utilisation à basse température. L'additif fluidifiant à froid (CFI) est, de préférence, choisi parmi les copolymères et terpolymères d'éthylène et d'ester(s) vinylique(s) et/ou acrylique(s), seuls ou en mélange tels que décrits ci-dessus.

Le concentré d'additif peut également comprendre un ou plusieurs autres additifs couramment utilisés dans les carburants ou combustibles et, différents du copolymère à blocs décrit précédemment.

Le concentré d'additif peut, typiquement, comprendre un ou plusieurs autres additifs choisis parmi les détergents, les agents anti-corrosion, les dispersants, les désémulsifiants, les agents anti-mousse, les biocides, les réodorants, les additifs procétane, les modificateurs de friction, les additifs de lubrifiance ou additifs d'onctuosité, les agents d'aide à la combustion (promoteurs catalytiques de combustion et de suie), les agents améliorant le point de trouble, le point d'écoulement, la TLF, les agents anti-sédimentation, les agents anti-usure et/ou les agents modifiant la conductivité.

Parmi ces additifs, on peut citer en particulier :
a) les additifs procétane, notamment (mais non limitativement) choisis parmi les nitrates d'alkyle, de préférence le nitrate de 2-éthyl hexyle, les peroxydes d'aryle, de préférence le peroxyde de benzyle, et les peroxydes d'alkyle, de préférence le peroxyde de ter-butyle;
b) les additifs anti-mousse, notamment (mais non limitativement) choisis parmi les polysiloxanes, les polysiloxanes oxyalkylés, et les amides d'acides gras issus d'huiles végétales ou animales. Des exemples de tels additifs sont donnés dans EP861882, EP663000, EP736590 ;
c) les additifs détergents et/ou anti-corrosion, notamment (mais non limitativement) choisis dans le groupe constitué par les amines, les succinimides, les alkénylsuccinimides, les polyalkylamines, les polyalkyles polyamines, les polyétheramines, les sels d'ammonium quaternaire et les dérivés du triazole ; des exemples de tels additifs sont donnés dans les documents suivants : EP0938535, US2012/0010112 et WO2012/004300.
d) les additifs de lubrifiance ou agents anti-usure, notamment (mais non limitativement) choisis dans le groupe constitué par les acides gras et leurs dérivés ester ou amide, notamment le monooléate de glycérol, et les dérivés d'acides carboxyliques mono- et polycycliques. Des exemples de tels additifs sont donnés dans les documents suivants: EP680506, EP860494, WO98/04656, EP915944, FR2772783, FR2772784.
e) les additifs de point de trouble, notamment (mais non limitativement) choisis dans le groupe constitué par les terpolymères oléfine à chaîne longue/ester (méth)acrylique /maléimide, et les polymères d'esters d'acides fumarique /maléique. Des exemples de tels additifs sont donnés dans FR2528051, FR2528051, FR2528423, EP112195, EP172758, EP271385, EP291367 ;
f) les additifs d'anti-sédimentation et/ou dispersants de paraffines notamment (mais non limitativement) choisis dans le groupe constitué par les copolymères acide (méth)acrylique/(méth)acrylate d'alkyle amidifiés par une polyamine, les alkénylsuccinimides de polyamine, les dérivés d'acide phtalamique et d'amine grasse à double chaîne; des résines alkylphénol. Des exemples de tels additifs sont donnés dans les documents suivants: EP261959, EP593331, EP674689, EP327423, EP512889, EP832172; US2005/0223631 ; US5998530; WO93/14178.
g) les additifs polyfonctionnels d'opérabilité à froid choisis dans le groupe constitué par les polymères à base d'oléfine et de nitrate d'alkényle tels que décrits dans EP573490 ;

Ces autres additifs sont en général ajoutés en quantité allant de 100 à 1 000 ppm (chacun).

L'utilisation d'un tel concentré d'additif peut être la même que celle du copolymère à blocs décrite ci-dessus, en particulier, le concentré peut être utilisé pour retarder ou empêcher la sédimentation des cristaux des composés à substituants n-alkyle, iso-alkyle ou n-alcényle du carburant ou combustible lors de son stockage et/ou de l'utilisation à basse température.

Le concentré d'additif peut, avantageusement, comprendre entre 5 et 99% massique, de préférence entre 10 et 80%, plus préférentiellement entre 25 à 70% de copolymère à blocs tel que décrit précédemment.

Le concentré d'additif peut, typiquement, comprendre entre 1 et 95% massique, de préférence 10 à 70%, plus préférentiellement 25 à 60% de liquide organique, le reste correspondant au copolymère à blocs et, éventuellement, aux autres additifs différents du copolymère à blocs tels que décrits ci-dessus.

De façon générale, la solubilité du copolymère à blocs dans les liquides organiques, les carburants ou les combustibles décrits précédemment dépendra notamment de la masse molaire moyenne en poids et en nombre, respectivement M_{w} et Mₙ, du copolymère à blocs. On choisira les masses molaires moyennes M_{w} et Mₙ du copolymère à blocs de manière à ce que le copolymère à blocs soit soluble dans le carburant ou combustible et/ou le liquide organique du concentré pour lequel il est destiné.

Les masses molaires moyennes M_{w} et Mₙ du copolymère à blocs peuvent également avoir une influence sur l'efficacité de ce copolymère à blocs comme additif de tenue à froid. On choisira donc les masses molaires moyennes M_{w} et Mₙ de manière à optimiser l'effet du copolymère à blocs, notamment l'effet TLF et anti-sédimentation dans les carburants ou les combustibles décrits ci-dessus.

L'optimisation des masses molaires moyennes M_{w} et Mₙ peut être effectuée par des essais de routine accessibles à l'homme du métier.

Selon un mode de réalisation particulier, le copolymère à blocs a, avantageusement, une masse molaire moyenne en poids (Mw) comprise entre 1 000 et 30 000 g.mol⁻¹, de préférence entre 4000 et 10 000 g.mol⁻¹, plus préférentiellement inférieure à 4000 g.mol⁻¹, et/ou une masse molaire moyenne en nombre (Mn) comprise entre 1 000 et 15 000 g.mol⁻¹ de préférence entre 4000 et 10 000 g.mol⁻¹, plus préférentiellement inférieure à 4000 g.mol⁻¹. Les masses molaires moyennes en nombre et en poids sont mesurées par chromatographie d'exclusion stérique (SEC en anglais « Size Exclusion Chromatography). Les conditions opératoires de la SEC, notamment, le choix du solvant seront choisies en fonction des fonctions chimiques présentent au sein du copolymère à blocs selon l'invention.

Selon un mode de réalisation particulier, une composition de carburant ou combustible est préparée selon tout procédé connu en additivant :
(1) un carburant ou combustible avec :
(2) au moins un copolymère à blocs et,
(3) un additif fluidifiant à froid (CFI) améliorant la tenue à froid du carburant ou combustible, le carburant ou combustible, le copolymère et l'additif fluidifiant à froid (CFI) étant tels que décrits ci-dessus.

Le copolymère à blocs est présent dans la composition de carburant ou combustible dans une quantité suffisante pour retarder ou empêcher la sédimentation des cristaux desdits composés à substituants n-alkyle, iso-alkyle ou n-alcényle lors du stockage et/ou de l'utilisation à basse température dudit carburant ou combustible (1).

La composition de carburant ou combustible comprend avantageusement au moins 10ppm, de préférence au moins 50 ppm, avantageusement entre 10 et 5 000ppm, plus préférentiellement entre 10 et 1 000ppm du copolymère à blocs décrit ci-dessus.

L'additif fluidifiant à froid (CFI) est, préférence, choisi parmi les copolymères et terpolymères d'éthylène et d'ester(s) vinylique(s) et/ou acrylique(s), seuls ou en mélange. L'additif fluidifiant à froid (CFI) est, avantageusement, choisi parmi les copolymères d'éthylène et d'ester(s) vinylique(s), seuls ou en mélange, en particulier les copolymères éthylène/acétate de vinyle (EVA) et éthylène/propionate de vinyle (EVP), plus préférentiellement les copolymères éthylène/acétate de vinyle (EVA).

L'additif fluidifiant à froid (CFI) est présent dans la composition de carburant ou combustible dans une quantité suffisante pour améliorer le comportement d'écoulement à basse température du carburant ou combustible (1) lors de son stockage et/ou de son utilisation à basse température.

La composition de carburant ou combustible comprend, avantageusement, au moins 10ppm, de préférence au moins 50 ppm, plus préférentiellement entre 10 et 5 000ppm, encore plus préférentiellement entre 10 et 1 000ppm de l'additif fluidifiant à froid (CFI).

Outre le copolymère à blocs (2) et l'additif fluidifiant à froid (3) décrits ci-dessus, la composition de carburant ou combustible (1) peut également contenir un ou plusieurs autres additifs différents des additifs (2) et (3) choisis parmi les détergents, les agents anti-corrosion, les dispersants, les désémulsifiants, les agents anti-mousse, les biocides, les réodorants, les additifs procétane, les modificateurs de friction, les additifs de lubrifiance ou additifs d'onctuosité, les agents d'aide à la combustion (promoteurs catalytiques de combustion et de suie), les agents améliorant le point de trouble, le point d'écoulement, la TLF, les agents anti-sédimentation, les agents anti-usure et/ou les agents modifiant la conductivité.

Les additifs différents des additifs (2) et (3) sont, par exemple, ceux cités précédemment.

Selon un autre mode de réalisation particulier, un procédé d'amélioration des propriétés de tenue à froid d'une composition de carburant ou combustible issu d'une ou de plusieurs sources choisies parmi le groupe consistant en les sources minérale, de préférence le pétrole, animale, végétale et synthétique comprend les étapes successives de :
a) détermination d'une composition d'additif la plus adaptée à la composition de carburant ou combustible à traiter ainsi que le taux de traitement nécessaire pour atteindre une spécification donnée relative aux propriétés de tenue à froid pour la composition de carburant ou combustible spécifique, ladite composition comprenant au moins le copolymère à blocs selon l'invention en association, éventuellement, avec un additif fluidifiant à froid (CFI). Alternativement, la composition d'additif est constituée par le concentré d'additif selon l'invention.
b) traitement de la composition de carburant ou combustible avec la quantité déterminée à l'étape a) de copolymère à blocs et, éventuellement, avec l'additif fluidifiant à froid (CFI).

Etant entendu que le procédé d'amélioration des propriétés de tenue à froid est destiné, avantageusement, à une composition de carburant ou combustible comprenant un ou plusieurs composés à substituants n-alkyle, iso-alkyle ou n-alcényle présentant une tendance à la cristallisation dans ledit carburant ou combustible lors de son stockage et/ou de son utilisation à basse température.

L'étape a) est réalisée selon tout procédé connu et relève de la pratique courante dans le domaine de l'additivation des carburants ou combustibles. Cette étape implique de définir une caractéristique représentative des propriétés de tenue à froid du carburant ou combustible, par exemple les caractéristiques anti-sédimentation, de fixer la valeur cible puis de déterminer l'amélioration qui est requise pour atteindre la spécification.

La détermination de la quantité de copolymère à blocs à ajouter à la composition de carburant ou combustible pour atteindre la spécification sera réalisée typiquement par comparaison avec la composition de carburant ou combustible contenant l'additif CFI mais sans copolymère à blocs.

La quantité de copolymère à blocs nécessaire pour traiter la composition de carburant ou combustible peut varier en fonction de la nature et l'origine du carburant ou combustible, en particulier en fonction du taux de composés à substituants n-alkyle, iso-alkyle ou n-alcényle. La nature et l'origine du carburant ou combustible peut donc être également un facteur à prendre en compte pour l'étape a).

Le procédé d'amélioration des propriétés de tenue à froid peut également comprendre une étape supplémentaire après l'étape b) de vérification de la cible atteinte et/ou ajustement du taux de traitement avec le copolymère à blocs comme additif de tenue à froid et, éventuellement, avec l'additif fluidifiant à froid (CFI).

### Exemples : Synthèses de copolymères à blocs de formule (I) par polymérisation radicalaire par transfert d'atome (ATRP en anglais « Atom Transfer Radical Polymerization»)

### Produits de départ :

- Monomère **A:** acrylate d'octadécyle (CAS 4813-57-4) ou acrylate de dodécyle (CAS 2156-97-0)
- Monomère **B:** 4-acétoxystyrène (CAS 2628-16-2) ou le chlorure de N,N,N-triméthylammonium vinylbenzene (CAS 26616-35-3)
- Amorceur **I** : 2-bromopropionate d'éthyle (CAS 535-11-5) ou 2-bromopropionate d'octadécyle
- Catalyseur : bromure de cuivre (CAS 7787-70-4)
- Ligand : 1,4,7,10,10-hexaméthyltriéthylène-tétramine (CAS 3083-10-1)

### Synthèse de 2-bromopropionate d'octadécyle

12g d'octadécanol (44 mmol, 1 eq) et 7,4g de triethylamine (53 mmol, 1,2 eq) sont dissous dans 110mL de THF cryodistillé. 5,81mL de bromure de 2-bromopropionyl (55 mmol, 1,25 eq) sont dissous dans 10 mL de THF cryodistillé. A 0°C, la solution de bromure de 2-bromopropionyl est ajoutée goutte à goutte à la solution d'octadécanol. La solution est placée sous agitation magnétique à 0°C pendant 2h puis à Tamb pendant 12h. Le THF est évaporé à l'évaporateur rotatif et le 2-bromopropionate d'octadécyle est dissous dans 100mL de dichlorométhane. La phase organique est lavée deux fois avec une solution aqueuse d'acide chlorhydrique à 10%, trois fois à l'eau, deux fois avec une solution aqueuse d'hydroxide de sodium 1M puis trois fois à l'eau. La phase organique est séchée avec du sulfate de sodium. Le solvant est évaporé à l'évaporateur rotatif puis le 2-bromopropionate d'octadécyle est séché sous vide. Rendement massique = 98%.
¹H NMR (400 MHz, 293 K, ppm dans le CDCl₃): δ 4.35 (q, 1H, e), 4.15 (m, 2H, d), 1.80 (d, 3H, f), 1.65 (tt, 2H, c), 1.24 (m, 30H, b), 0.87 (t, 3H, a).

### Exemple 1 : Synthèse d'un copolymère à blocs IAB acrylate de dodécyle /4-acétoxystyrène

- Une solution d'amorceur **I** est préparée en dissolvant, 1 équivalent de 2-bromopropionate d'octadécyle (1g, 405 g.mol⁻¹) dans 4mL d'anisole. La solution est dégazée par bullage d'azote avant utilisation.
- Une solution monomère **A/catalyseur/ligand** est obtenue en dissolvant dans 8 mL d'anisole, 7 équivalents d'acrylate de dodécyle (4.15g g, 240 g.mol⁻¹), 0,4 équivalent de bromure de cuivre (142 mg, 143 g.mol⁻¹) et 0,4 équivalent de 1,1,4,7,10,10-hexaméthyltriéthylène-tétramine (227 mg, 230 g.mol⁻¹), puis en dégazant la solution ainsi obtenue par bullage d'azote.
- Une solution monomère **B**/catalyseur/ligand est obtenue en dissolvant dans 4 mL d'anisole 14 équivalents de 4-acétoxystyrène (5.61g, 162 g.mol⁻¹), 0,4 équivalent de bromure de cuivre (142 mg, 143 g.mol⁻¹) et 0,4 équivalent de 1,1,4,7,10,10-hexaméthyltriéthylène-tétramine (227 mg, 230 g.mol⁻¹).

La solution d'amorceur est ajoutée sous flux d'azote à la solution monomère **A**/catalyseur/ligand. Le mélange est placé sous vide, sous agitation magnétique, à 90°C, à l'abri de la lumière. L'avancement de la réaction est suivi par analyse spectroscopie RMN ¹H (spectromètre Bruker 400 MHz). Après 10h de réaction, la totalité d'acrylate de dodécyle est consommée. Après dégazage par bullage d'azote, la solution monomère **B**/catalyseur/ligand est ensuite ajoutée au milieu réactionnel. Après 18h, 97% du 4-acétoxystyrène est consommé. Après 18h à 90°C, la réaction est stoppée en plongeant le ballon dans de l'azote liquide. On ajoute 100 mL de tétrahydrofurane au milieu réactionnel, puis on passe la solution ainsi obtenue sur colonne d'alumine basique. Le solvant est évaporé à l'évaporateur rotatif ; On obtient **8,1 g** (4240 g.mol⁻¹, rdt massique de 76%) du copolymère bloc b-**I**₁₈**A**¹²₇**B**^{ac}₁₃ après précipitation dans 400 mL de méthanol froid, centrifugation et séchage sous vide.
¹H NMR (400 MHz, 293 K, ppm dans CDCl₃): δ 6.3-7.0 (m, Ar), 4.05 (m, 3+7), 2.2 (m, g), 1.3-1.8 (m, c+d+4+8) 1.0-1.3 (m, 5+9), 0.8 (t, 6+10).

D'autres copolymères à blocs de formule décrite précédemment (I) ont été synthétisés selon le même protocole que l'exemple 1 mais en faisant varier la nature des monomères **A** et **B** ainsi que leur ratios. Les caractéristiques des copolymères à blocs obtenus sont répertoriées dans le tableau 1 suivant :

**Tableau 1**

| Réf. ⁽¹⁾ | | m | n | p | R₀ | R₁ | R₂ | R₃ | R₄ ⁽²⁾ | R₅ | R₆ | R₇ | R₈ | R₉ | R₁₀ | X | Mn⁽³⁾ g.mol⁻¹ | Rdt ⁽⁴⁾ (%) |
|---|---|---|---|---|---|---|---|---|---|---|---|---|---|---|---|---|---|---|
| b-I₁₈**A**¹²₇**B**^{ac}₁₃ | (I) | 1 | 7 | 13 | H | -C₁₈H₃₇ | -C₁₂H₂₅ | -OCOR₆ | Br | -CH₃ | H | -CH₃ | - | - | - | - | 6000 | 76 |
| b-I₁₈**A**¹²₁₁**B**^{ac}₁₂ | (I) | 1 | 11 | 12 | H | -C₁₈H₃₇ | -C₁₂H₂₅ | -OCOR₆ | Br | -CH₃ | H | -CH₃ | - | - | - | - | 7700 | 78 |
| b-I₁₈**A**¹²₁₃**B**^{aq}₄ | (I) | 1 | 13 | 4 | H | -C₁₈H₃₇ | -C₁₂H₂₅ | Formule (III) | Br | -CH₃ | H | - | -CH₃ | -CH₃ | -CH₃ | Cl | 4200 | 43 |

| | | | | | | | | | | | | | | | | | | |
|---|---|---|---|---|---|---|---|---|---|---|---|---|---|---|---|---|---|---|
| ⁽¹⁾ Les valeurs m, n et p sont déterminées par analyse spectroscopie RMN ¹H (spectrometre Bruker 400 MHz). ⁽²⁾ On peut avoir des mélanges de copolymères dans lequel R₄=Br et/ou H et/ou OH et/ou groupement issu de phénomènes parasitaires de recombinaison lors de la polymérisation radicalaire. ⁽³⁾ Masse molaire moyenne en nombre déterminée par chromatographie d'exclusion stérique (SEC en anglais « Size Exclusion Chromatography »). . Pour l'échantillon **b-I₁₈**A¹²₁₃B^{aq}₄ contenant un ammonium quaternaire, les masses molaires sont mesurées par un appareil Viscotek GPC Max TDA 305 de Malvern équipé de deux colonnes de gel colonnes PLGel Mixed C de chez Agilent et un détecteur des rayonnements ionisants. Le solvant utilisé est le chloroforme (+1% de triéthylamine) et le flux est fixé à 1 mL.min⁻¹. La calibration est effectuée avec des échantillons standards de polystyrène de faibles dispersités. . Pour les autres échantillons, les valeurs sont mesurées par un appareil Varian équipé de colonnes de gel TOSOHAAS TSK et un détecteur des rayonnements ionisants. Le solvant utilisé est le THF et le flux est fixé à 1 mL.min⁻¹. La calibration est effectuée avec des échantillons standards de polystyrène de faibles dispersités. ⁽⁴⁾ Rendement massique. | | | | | | | | | | | | | | | | | | |

### Exemples comparatifs : Synthèse de copolymères statistiques de formule (I) par polymérisation radicalaire par transfert d'atome (ATRP)

### Exemple 2 : Synthèse d'un copolymère statistique acrylate de dodécyle /4-acétoxystyrène

Une solution d'amorceur **I** est préparée en dissolvant 1 équivalent de 2-bromopropionate d'octadécyle (1 g, 405 g.mol⁻¹) dans 4 mL d'anisole. La solution est dégazée par bullage d'azote. 11 équivalents d'acrylate de dodécyle (6,53 g, 240 g.mol⁻¹) préalablement purifié sur colonne d'alumine basique, 14 équivalents de 4-acétoxystyrène (5,61 g, 162 g.mol⁻¹) préalablement purifié sur colonne d'alumine basique, 0,4 équivalents de bromure de cuivre (0,142 mg, 143 g.mol⁻¹) et 0,4 équivalents de 1,1,4,7,10,10-Hexamethyltriethylenetetramine (227 mg, 230 g.mol⁻¹) sont dissous dans 8 mL d'anisole. La solution est dégazée par bullage d'azote.

La solution d'amorceur **I** est ajoutée sous flux d'azote, à la solution de monomères puis

le mélange est placé sous agitation magnétique, à 90°C, à l'abri de la lumière. L'avancement de la réaction est suivi par analyse spectroscopie RMN ¹H (spectromètre Bruker 400 MHz).

Après 17h à 90°C, la réaction est stoppée en plongeant le ballon dans de l'azote liquide.

100mL de THF sont ajoutés puis le mélange est passé sur colonne d'alumine basique afin d'éliminer le catalyseur. Le copolymère est précipité dans 400 mL de méthanol froid puis séché sous vide. On obtient **10 g** (5060 g.mol⁻¹, rdt massique de 79%) du copolymère statistique s-I₁₈**A**¹²₁₀**B**^{ac}₁₄ après précipitation dans 400 mL de méthanol froid et séchage sous vide.
¹H NMR (400 MHz, 293 K, ppm dans CDCl₃): δ 6.3-7.0 (m, Ar), 4.05 (m, 3+7), 2.2 (m, g), 1.3-1.8 (m, c+d+4+8) 1.0-1.3 (m, 5+9), 0.8 (t, 6+10).

### Exemple 3 : Synthèse d'un copolymère statistique acrylate de dodécyle /4-acétoxystyrène

Un autre copolymère statistique s-I₁₈**A**¹²₇**B**^{ac}₁₄ a été synthétisé selon le même protocole que l'exemple 2 mais en mettant 7 équivalents d'acrylate de dodécyle au lieu de 11. (Rendement massique de 74%)

Les caractéristiques des copolymères statistiques obtenus sont répertoriées dans le tableau 2 suivant :

**Tableau 2**

| Réf. ⁽¹⁾ | | m | n | p | R₀ | R₁ | R₂ | R₃ | R₄ ⁽²⁾ | R₅ | R₆ | R₇ | Mn⁽³⁾ g.mol⁻¹ | Rdt ⁽⁴⁾ (%) |
|---|---|---|---|---|---|---|---|---|---|---|---|---|---|---|
| s-I₁₈**A**¹²₁₀**B**^{ac}₁₄ | (I) | 1 | 10 | 14 | H | -C₁₈H₃₇ | -C₁₂H₂₅ | -OCOR₆ | Br | -CH₃ | H | -CH₃ | 6700 | 79 |
| s-I₁₈**A**¹²₇**B**^{ac}₁₄ | (I) | 1 | 7 | 14 | H | -C₁₈H₃₇ | -C₁₂H₂₅ | -OCOR₆ | Br | -CH₃ | H | -CH₃ | 7500 | 74 |

### Evaluation des performances à froid des copolymères dans une composition carburant

Les copolymères répertoriés aux tableaux 1 et 2 sont testés comme additif anti-sédimentation dans un distillat gazole moteur de type B₇, **GOM** dont les caractéristiques sont répertoriées dans le tableau 3 ci-dessous :

**Tableau 3:**

| **GOM** | | | | | **GOM (B₇)** | | | | |
|---|---|---|---|---|---|---|---|---|---|
| % Paraffines totales mesuré par chromatographie en phase gazeuse bidimensionnelle (GC₂D) (total %masse) | | | | | 20,39 | | | | |
| Nombre de carbones | | | | | 7 | 8 | 9 | 10 | 11 |
| (%masse) | | | | | 0,09 | 0,19 | 1,26 | | 2,11 |
| Nombre de carbones | | | | | 12 | 13 | 14 | 15 | 16 |
| (%masse) | | | | | 1,93 | 1,67 | 1,74 | 1,55 | 1,24 |
| Nombre de carbones | | | | | 17 | 18 | 19 | 20 | 21 |
| (%masse) | | | | | 1,10 | 1,16 | 1,00 | 0,87 | 0,74 |
| Nombre de carbones | | | | | 22 | 23 | 24 | 25 | 26 |
| (%masse) | | | | | 0,59 | 0,36 | 0,33 | 0,21 | 0,14 |
| Nombre de carbones | | | | | 27 | 28 | | | |
| (%masse) | | | | | 0,06 | 0 | | | |
| TLF (°C) NF EN 116 | | | | | -7 | | | | |
| PTE (°C) ASTM D97 | | | | | -12 | | | | |
| PTR (°C) ASTM D7689 | | | | | -8 | | | | |
| MV15 (kg/m³) NF EN ISO12185 | | | | | 837.3 | | | | |
| Teneur en soufre (mg/kg) | | | | | < 10 | | | | |
| Teneur en EMHV (%vol) | | | | | | 7 | | | |

| Distillation ASTM D86 (°C) | | | | | | | | | |
|---|---|---|---|---|---|---|---|---|---|
| 0% | 5 % | 10 % | 20 % | 30 % | 40 % | 50% | 60 % | 70 % | 80 % |
| 163.8 | 185.1 | 191.4 | 205.5 | 223.8 | 242.5 | 261.3 | 281.1 | 300.5 | 318.9 |
| 90 % | 95% | 100 % | | | | | | | |
| 337.2 | 350.2 | 360.5 | | | | | | | |

### . Préparation et propriété de tenue à froid de compositions carburant C₀ à C₅

Chaque composition C₁ à C₅ est réalisée en solubilisant 100 ppm massique de copolymère (100% de matière active) dans une composition de gazole **GOM** contenant 300 ppm massique d'un additif fluidifiant à froid (CFI) commercialisé sous la dénomination CP7936C qui est un éthylène-acétate de vinyle (EVA de l'anglais Ethylene-vinyl acetate) comportant 30.5% m/m d'acétate de vinyle et concentré à 70% m/m dans un solvant aromatique (Solvesso 150).

A titre comparatif, on a testé également une composition témoin C₀ correspondant au gazole **GOM** contenant uniquement 440 ppm massique de l'additif de fluidifiant à froid (CFI) EVA décrit ci-dessus, ce taux correspondant à un taux de traitement en polymère équivalent à celui des compositions C₁ à C₅.

On évalue les performances des copolymères comme additif anti-sédimentation (WASA) en testant leur aptitude à éviter la sédimentation de compositions carburant Cₓ additivées avec l'EVA classique. Les propriétés d'anti-sédimentation des compositions carburant Cₓ sont évaluées par l'essai de sédimentation ARAL suivant : 250mL de la composition carburant Cₓ sont refroidis dans des éprouvettes de 250mL dans une enceinte climatique à -13°C selon le cycle de température suivant : passage de +10°C à -13°C en 4h puis isotherme à -13°C pendant 16h. A la fin du test, une cotation visuelle de l'aspect de l'échantillon et du volume de phase sédimentée est effectuée, puis les 20% du volume inférieur sont prélevés, pour caractérisation en point de trouble PTR (ASTM D7689) et en température limite de filtrabilité (TLF). On compare ensuite l'écart de PTR avant et après sédimentation (i.e. sur les 20% en volume du bas de l'éprouvette). Plus l'écart est faible, meilleure est l'effet anti-sédimentation. Généralement, on estime qu'un additif a un effet anti-sédimentation lorsque l'écart de PTR avant et après sédimentation est inférieur à 3.

On évalue également les performances de chaque copolymère comme additif booster de TLF en testant leur aptitude à abaisser la Température Limite de Filtrabilité (TLF en anglais CFPP « Cold Filter Plugging Point ») des compositions carburant Cₓ additivées avec l'EVA classique.

Les résultats sont réunis dans le tableau 4 ci-dessous.

**Tableau 4**

| N° composition | Réf. | Volume de sédiments [mL] | Mesure TLF (°C) NF EN 116 | | Cotation visuelle | Mesure de PTR [°C] ASTM D7689 | | |
|---|---|---|---|---|---|---|---|---|
| | | | Avant | Après | | Avant | Après | Ecart |
| GOM | | | -7 | | | -8 | | |
| C₀ | | 70 | -21 | -16 | clair | -7 | -1 | 6 |
| C₁ | b-**I**₁₈**A**¹²₇**B**^{ac}₁₃ | 0 | -31 | -28 | trouble | -7 | -7 | 0 |
| C₂ | b-I₁₈**A**¹²₁₁**B**^{ac}₁₂ | 5 | -28 | -29 | trouble | -7 | -6 | 1 |
| C₃ | b-**I**₁₈**A**¹²₁₃**B**^{aq}₄ | 0 | -23 | -22 | trouble | -8 | -8 | 0 |
| C₄ | s-I₁₈**A**¹²₁₀**B**^{ac}₁₄ | 42 | -23 | -16 | clair | -7 | -2 | 5 |
| C₅ | s-I₁₈**A**¹²₇**B**^{ac}₁₄ | 50 | -17 | -5 | clair | -7 | 0 | 7 |

L'effet anti-sédimentation n'est observé que pour les compositions carburant C₁, C₂ et C₃. On n'observe pas d'effet anti-sédimentation pour les compositions C₄ et C₅ contenant les copolymères obtenus par polymérisation statistique.

## Revendications

1. Copolymère à blocs comprenant :
(i) un bloc **A** consistant en une chaine de motifs structuraux dérivés d'un ou de plusieurs monomères α,β-insaturés acrylate ou méthacrylate d'alkyle, et
(ii) un bloc **B** consistant en une chaine de motifs structuraux dérivés d'un ou de plusieurs monomères α,β-insaturés choisis parmi les dérivés styréniques dont le noyau aromatique est substitué par au moins un groupement R choisi parmi les groupements :
- esters d'alkyle en C₁ à C₂₄ et,
- les chaines hydrocarbonées, linéaires ou ramifiées, de préférence acycliques, en C₁ à C₁₂, de préférence les groupements alkyles, ladite chaine étant substituée par un ou plusieurs groupements contenant un sel d'ammonium quaternaire.

2. Copolymère à blocs selon la revendication 1, **caractérisé en ce qu'**il comprend également (iii) une chaine terminale **I** consistant en une chaine hydrocarbonée, cyclique ou acyclique, saturée ou insaturée, linéaire ou ramifiée, en C₁ à C₃₂, ladite chaine étant située en position terminale dudit copolymère à blocs.

3. Copolymère à blocs selon l'une des revendications 1 et 2, **caractérisé en ce que** le monomère α,β-insaturé du bloc **A** est choisi parmi les acrylates ou méthacrylates d'alkyle, linéaires ou ramifiés, en C₁ à C₃₄.

4. Copolymère à blocs selon l'une quelconque des revendications 1 à 3, **caractérisé en ce que** le monomère α,β-insaturé du bloc **B** est choisi parmi les dérivés styrèniques dont le noyau aromatique est substitué par au moins un groupement ester d'alkyle en C₁ à C₂₄, ledit groupement ester étant en position méta, ortho ou para sur le noyau aromatique.

5. Copolymère à blocs selon l'une quelconque des revendications 1 à 3, **caractérisé en ce que** le monomère α,β-insaturé du bloc **B** est choisi parmi les dérivés styrèniques dont le noyau aromatique est substitué par au moins une chaine hydrocarbonée en C₁ à C₁₂, linéaire ou ramifiée, de préférence acycliques, de préférence les groupements alkyles, ladite chaine étant substituée par un ou plusieurs groupements contenant un sel d'ammonium quaternaire.

6. Copolymère à blocs selon la revendication 5, **caractérisé en ce que** le monomère α,β-insaturé du bloc **B** est choisi parmi les isomères des sels de (vinylbenzyl)trialkylammonium en position ortho, méta ou para, purs ou mélange.

7. Copolymère à blocs selon la revendication 6, **caractérisé en ce que** les substituants alkyles de l'ammonium sont identiques ou différents et, choisis indépendamment parmi les alkyles en C₁ à C₁₀, linéaires ou ramifiés, de préférence acycliques.

8. Copolymère à blocs selon l'une quelconque des revendications 1 à 7, **caractérisé en ce qu'**il est obtenu par copolymérisation séquencée et contrôlée.

9. Copolymère à blocs selon la revendication 8, **caractérisé en ce qu'**il est obtenu par copolymérisation séquencée et contrôlée à l'aide d'un amorceur de polymérisation comprenant la chaine terminale **I** selon la revendication 2.

10. Copolymère à blocs selon la revendication 9, **caractérisé en ce que** le copolymère est un copolymère diséquencé.

11. Copolymère à blocs selon l'une quelconque des revendications 1 à 10, **caractérisé en ce qu'**il est représenté par la formule (I) ou (II) suivante : 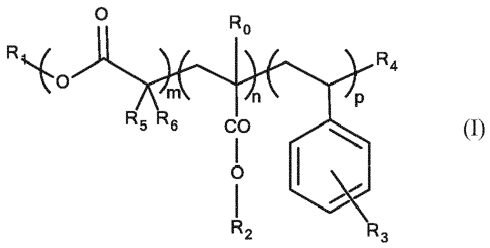 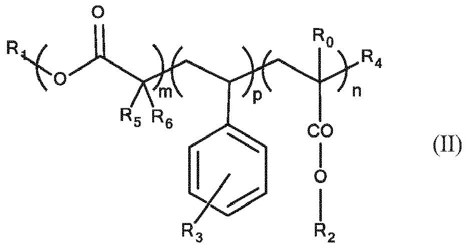 dans laquelle
m=0 ou 1,
n est un entier compris entre 2 et 20,
p est un entier compris entre 2 et 20,
R₀ est choisi parmi l'hydrogène ou le groupement méthyle,
R₁ est choisi parmi les chaines hydrocarbonées, cycliques ou acycliques, saturées ou insaturées, linéaires ou ramifiées, en C₁ à C₃₂, de préférence les groupements alkyles,
R₂ est choisi parmi les chaines hydrocarbonées, linéaires ou ramifiées, de préférence acycliques, en C₁ à C₃₂, de préférence les groupements alkyles,
R₃ est un substituant en position ortho, méta ou para sur le noyau aromatique, choisi parmi le groupe constitué par :
- les groupements -OCOR₇ où R₇ est choisi parmi les groupements alkyles en C₁ à C₂₄, linéaires ou ramifiés, de préférence acycliques et,
- les groupements de formule (III) suivante :
-CH₂-N⁺(R₈)(R₉)(R₁₀) X⁻ (III)
dans laquelle
X⁻ est choisi parmi les ions hydroxyde, halogénures et les anions organiques et, R₈, R₉ et R₁₀ sont identiques ou différents et, choisis indépendamment parmi les groupements alkyles en C₁ à C₁₀, linéaires ou ramifiés, de préférence acycliques,
R₄ est choisi parmi le groupe constitué par :
- l'hydrogène ; -OH
- les halogènes et,
- les chaines hydrocarbonées, cycliques ou acycliques, saturées ou insaturées, linéaires ou ramifiées, en C₁ à C₃₂, de préférence les groupements alkyles, lesdites chaines étant éventuellement substituées par un ou plusieurs groupements contenant au moins un hétéroatome choisi parmi N et O,
R₅ et R₆ sont identiques ou différents et, choisis indépendamment parmi le groupe constitué par l'hydrogène et les groupements alkyles en C₁ à C₁₀, linéaires ou ramifiés, plus préférentiellement acycliques.

12. Utilisation d'un copolymère à blocs tel que décrit dans l'une quelconque des revendications 1 à 11, comme additif anti-sédimentation.

13. Utilisation selon la revendication 12, comme additif améliorant les propriétés de tenue à froid d'un carburant ou combustible issu d'une ou de plusieurs sources choisies parmi le groupe consistant en les sources minérale, de préférence le pétrole, animale, végétale et synthétique, ledit carburant ou combustible comprenant un ou plusieurs composés à substituants n-alkyle, iso-alkyle ou n-alcényle présentant une tendance à la cristallisation dans ledit carburant ou un combustible lors de son stockage et/ou de son utilisation à basse température, ledit copolymère à blocs étant utilisé en association avec au moins un additif fluidifiant à froid (CFI) améliorant les propriétés d'écoulement à basse température dudit carburant ou combustible lors de son stockage et/ou son utilisation à basse température.

14. Utilisation selon la revendication 13, pour amplifier également l'effet fluidifiant de l'additif fluidifiant à froid (CFI) en améliorant la Température Limite de Filtrabilité (TLF) selon la norme NF EN 116 dudit carburant ou combustible.

15. Concentré d'additif comprenant un copolymère à blocs tel que décrit dans l'une quelconque des revendications 1 à 11, en mélange avec un liquide organique, ledit liquide organique étant inerte vis-à-vis du copolymère à blocs et miscible aux carburants ou combustibles issus d'une ou de plusieurs sources choisies parmi le groupe consistant en les sources minérale, de préférence le pétrole, animale, végétale et synthétique, ledit carburant ou combustible comprenant un ou plusieurs composés à substituants n-alkyle, iso-alkyle ou n-alcényle présentant une tendance à la cristallisation dans ledit carburant ou un combustible lors de son stockage et/ou de son utilisation à basse température.

16. Concentré d'additif selon la revendication 15, comprenant au moins un additif fluidifiant à froid (CFI) améliorant la tenue à froid, ledit additif fluidifiant à froid étant de préférence choisi parmi les copolymères et terpolymères d'éthylène et d'ester(s) vinylique(s) et/ou acrylique(s) (EVA et/ou EVP), seuls ou en mélange.

17. Utilisation d'un concentré selon l'une des revendications 15 et 16, pour retarder ou empêcher la sédimentation des cristaux des composés à substituants n-alkyle, iso-alkyle ou n-alcényle du carburant ou combustible lors de son stockage et/ou de l'utilisation à basse température.

18. Utilisation selon la revendication 17, **caractérisée en ce que** le carburant ou combustible est choisi parmi les gazoles, les bio-gazoles, les mélanges de gazole et de bio-gazole de type Bₓ et les fiouls, de préférence, les fiouls domestiques (FOD).

19. Composition de carburant ou combustible comprenant :
(1) un carburant ou combustible issu d'une ou de plusieurs sources choisies parmi le groupe consistant en les sources minérale, de préférence le pétrole, animale, végétale et synthétique, ledit carburant ou combustible comprenant un ou plusieurs composés à substituants n-alkyle, iso-alkyle ou n-alcényle présentant une tendance à la cristallisation dans ledit carburant ou combustible lors de son stockage et/ou de son utilisation à basse température,
(2) le copolymère à blocs tel que décrit dans l'une quelconque des revendications 1 à 11, ledit copolymère étant présent dans la composition dans une quantité suffisante pour retarder ou empêcher la sédimentation des cristaux desdits composés à substituants n-alkyle, iso-alkyle ou n-alcényle, lors du stockage et/ou de l'utilisation à basse température dudit carburant ou combustible (1) et,
(3) un additif fluidifiant à froid (CFI) améliorant la tenue à froid, de préférence, choisi parmi les copolymères et terpolymères d'éthylène et d'ester(s) vinylique(s) et/ou acrylique(s) (EVA et/ou EVP), seuls ou en mélange, ledit additif étant présent dans la composition de carburant ou combustible en une quantité suffisante pour améliorer le comportement d'écoulement à basse température du carburant ou combustible (1) lors de son stockage et/ou de son utilisation à basse température.

20. Composition selon la revendication 19, **caractérisée en ce qu'**elle contient au moins 10ppm de préférence, entre 10 et 5 000ppm du copolymère à blocs et au moins 10ppm, de préférence, entre 10 et 5 000ppm de l'additif fluidifiant à froid (CFI).

21. Composition selon l'une des revendications 19 et 20, **caractérisée en ce que** le carburant ou combustible est choisi parmi les gazoles, les bio-gazoles, les mélanges de gazole et de bio-gazole de type Bₓ et les fiouls.
